# NEUE EUROPÄISCHE PATENTSCHRIFT

(11) **EP 0 668 336 B2**
(45) Veröffentlichungstag und Bekanntmachung des Hinweises auf die Entscheidung über den Einspruch: **29.08.2001**
(45) Hinweis auf die Patenterteilung: 20.09.1995
(21) Anmeldenummer: 94100929.2
(22) Anmeldetag: 22.01.1994
(51) Int. Cl.: C09J 7/04

(54) **Klebeband**
Adhesive tape
Ruban adhésif

(43) Veröffentlichungstag der Anmeldung: 23.08.1995
(73) Patentinhaber: COROPLAST FRITZ MÜLLER KG, D-42279 Wuppertal (DE)
(72) Erfinder: Müller, Kurt Dr., D-45549-Sprockhövel (DE)
(74) Vertreter: Zapf, Christoph, Dipl.-Ing.

(56) Entgegenhaltungen:
- EP-A- 0 184 001
- DD-A- 217 702
- DD-A- 299 668
- DE-A- 2 005 917
- GB-A- 1 602 878
- US-A- 4 404 243
- US-A- 4 654 254
- P. Böttcher et al., Vliesstoffe, Leipzig, 1976
- Nonwovens World, Vol. 2, No. 6, 1988
- Textile Terms and Definitions, 10. Ausgabe, S. 328-329
- Römpp, Chemielexikon, Band IV, "Selbstklebeerzeugnisse", S. 5828
- Römpp, Chemielexikon, Band II, "Klebestreifen", S. 3276
- Römpp, Chemielexikon, Band II, "Klebebänder", S. 2251
- tesa, Technologie des Klebens, Produktblatt
- P.A. Koch, Grosses Textillexikon, L-Z, S. 109
- Pira Accession No. 200 00061 (1993)
- Pira Accession No. 9473734 (1990)

## Beschreibung

Die vorliegende Erfindung betrifft ein Klebeband gemäß dem Oberbegriff des Patentanspruchs 1.

In Dokument US-A-4 654 254 wird ein derartiges Klebeband mit guten Abrolleigenschaften vorgestellt, das aus einem textilen Träger mit 63/40 Webart aus Baumwollkettgarn und Polyesterschußfäden sowie einer Klebstoffschicht besteht.

Weiterhin sind Klebebänder bekannt, wobei der textile bandförmige Träger als Gewebe ausgebildet ist. Um derartige Klebebänder, die als Klebebeschichtung eine druckempfindliche Haftklebebeschichtung besitzen, in Form einer archimedischen Spirale zu einer Rolle aufzurollen und später gebrauchsfähig wieder abrollen zu können, müssen diese eine Vorbehandlung erfahren, z.B. eine Flammvorbehandlung, eine Beschichtung mit einem Primer oder einer Releaseschicht.

Derartige Maßnahmen sind aber kostenaufwendig und verteuern den Herstellungsvorgang. Zudem besitzen derartige Bänder einen geringen Geräuschdämmeffekt.

Der vorliegenden Erfindung liegt die Aufgabe zugrunde, ein Klebeband der eingangs beschriebenen Art derart zu verbessern, daß das Klebeband ohne besondere Abdeckung oder Behandlung der Klebebeschichtung leicht gebrauchsfähig abgerollt werden kann und verbesserte Geräuschdämm-Eigenschaften bei der Anwendung besitzt.

Erfindungsgemäß wird dies durch die kennzeichnenden Merkmale des Anspruchs 1 erreicht. Derartige Nähte werden durch Einnähen oder Nähwirken von textilen Fäden gebildet. Diese Nähvliese besitzen aufgrund ihrer Herstellung eine Struktur, die aus eng beieinanderliegenden Tälern und Erhebungen von Naht zu Naht und Stich zu Stich geschaffen werden. Es ergibt sich somit eine Oberfläche mit vielen kleinen Erhebungen, die es möglich macht, das Klebeband mit der insbesondere selbstklebenden Beschichtung ohne besondere Trennschicht aufzurollen und zum Verbrauch ohne Beschädigung der Klebeschicht wieder leicht abrollen zu können. Zudem besitzt das Vliesmaterial aufgrund seiner Vliesstruktur aus einzelnen kurzen Textilfäden verbesserte Geräuschdämm- und Polstereigenschaften, da die Vliesstruktur in sich nachgiebig ist, so daß beim Umwickeln mit dem erfindinngsgemäßen Klebeband ein Polstereffekt erreicht wird. Dies ist insbesondere beim Einsatz im PKW-Bereich nützlich, da mit dem erfindungsgemäßen Klebeband umwickelte Kabelsätze keine Klappergeräusche bei der Berührung mit der Karosserie der anderen Teilen erzeugen können. Deshalb können derartig mit dem erfindungsgemäßen Klebeband umwickelte Kabelsätze ohne eine zusätzliche Schaumstoffumhüllung unmittelbar im PKW eingesetzt werden.

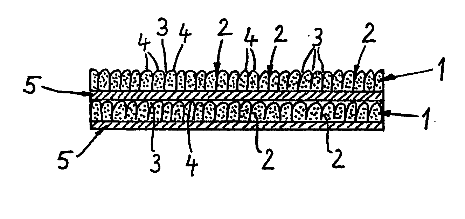

Vorteilhafte Ausführungen der Erfindung sind in den Unteransprüchen enthalten. Anhand des in der beiliegenden Zeichnung dargestellten Ausführungsbeispiels wird die Erfindung näher erläutert.

Wie der Fig. zu entnehmen ist, die im Schnitt zwei übereinanderliegende Abschnitte des erfindungsgemäßen Klebebandes, z.B. im aufgerollten Zustand, zeigt, besteht ein erfindungsgemäßes Klebeband aus einem bandförmigen Träger 1 aus einem textilen Vliesmaterial. Dieses Vliesmaterial ist ein textiles Flächengebilde aus einer Aneinanderreihung und Aufeinanderschichtung geordneter und ungeordneter Fasern. Es kann aus Längs-, Längs- und Quer-, Querfasern oder einer vollkommenen Wirrfaserlage bestehen. Vorzugsweise kann das Vliesmaterial aus Zellulosefasern (Zellwolle) gebildet werden. Weiterhin kann es vorteilhaft sein, dieses Vliesmaterial aus Polyesterfasern herzustellen. Wie der Skizze zu entnehmen ist, sind in dem Vliesmaterial eine Vielzahl parallel zueinader verlaufender, eingenähter Nähte 2 ausgebildet, so daß sich eine Oberfläche aus Tälern 3 und Erhebungen 4 von Naht zu Naht ergibt. Auch ergibt sich eine derartige Oberflächenstruktur von Stich zu Stich, was nicht dargestellt ist. Somit besteht die Oberfläche des erfindungsgemäß verwendeten Nähvlieses aus vielen kleinen Erhebungen 4 und Vertiefungen (Täler 3). Die die Nähte 2 bildenden Nähfäden können als reißbare Nähfäden ausgebildet werden. Ebenso ist es möglich, die Nähfäden beispielsweise aus Kunststoff, insbesondere Aramid, herzustellen. Hierbei ist die vorliegende Erfindung nicht auf die vorstehenden Matenalien beschränkt, sondern es ergeben sich eine Vielzahl von Varianten und Kombinationsmöglichkeiten.

Auf einer Seite des Nähvlieses ist eine Klebebeschichtung 5 aufgebracht. Bei dieser Klebebeschichtung 5 handelt es sich um einen druckempfindlichen Haftkleber. Hierbei kann es sich um einen Kleber auf der Basis von Synthesekautschuk handeln, der lösungsmittelfrei ist. Weiterhin kann es zweckmäßig sein, wenn das Nähvlies in sich verdichtet ist, so daß seine Porosität verringert wird. Weiterhin liegt es im Rahmen der Erfindung, wenn das erfindungsgemäße Klebeband flammhemmend ausgerüstet ist, so daß selbst verlöschende Eigenschaften erreicht werden.

Die mechanischen Eigenschaften eines erfindungsgemäßen Vliesmaterials können wie folgt sein:

| | |
|---|---|
| Luftdurchlässigkeit | 0-600 I/sec m² nach DIN 53 887 |
| Reißdehnung | mind. 8 % nach DIN 53 455 |
| Reißfestigkeit | > 50 N/cm nach DIN 53 455 |
| Flächengewicht | 50 - 200 g/m² |
| Dicke | 150 - 400 um |

Die Abrollkraft beträgt etwa 1 bis 4 N/19 mm.

Das erfindungsgemäße Klebeband ist alterungsbeständig, schmiegsam, geräuschdämmend, kälte- und wärmebeständig, lösungsmittelfrei, PVC-verträglich, klebestark und kaum selbstverlöschend. Zudem sind durch die gesteuerte Abrollkraft hohe Maschinengeschwindigkeiten bei der Verarbeitung möglich.

## Patentansprüche

1. Klebeband zum Aufrollen zu einer Klebebandrolle und zum Abrollen von dieser, bestehend aus einem bandförmigen, textilen Träger (1) und einer auf dem Träger (1) einseitig aufgebrachten Klebebeschichtung (5) aus einem druckempfindlichen Haftkleber,
**dadurch gekennzeichnet** , daß der bandförmige textile Träger (1) aus einem Nähvlies besteht, das aus einem Vliesmaterial mit einer Vielzahl parallel zueinander verlaufender, eingenähter Nähte (2) gebildet ist, so daß sich eine Oberfläche aus Tälern (3) und Erhebungen (4) von Naht zu Naht ergibt.

2. Klebeband nach Anspruch 1,
**dadurch gekennzeichnet,** daß das Vliesmaterial aus Zellulosefasern gebildet ist.

3. Klebeband nach Anspruch 1 oder 2,
**dadurch gekennzeichnet,** daß die Näh-Nähte (2) aus reißbaren Nähfäden bestehen.

4. Klebeband nach einem der Ansprüche 1 bis 3,
**dadurch gekennzeichnet,** daß das Vliesmaterial aus Polyesterfasern besteht.

5. Klebeband nach einem der Ansprüche 1 bis 4,
**dadurch gekennzeichnet,** daß die Nähfäden der Näh-Nähte (2) aus nicht reißbaren Fäden, insbesondere aus Aramid bestehen.

6. Klebeband nach einem der Ansprüche 1 bis 5,
**dadurch gekennzeichnet,** daß das Vliesmaterial verdichtet ist.

## Claims

1. Adhesive tape for rolling up into a roll of adhesive tape and for unrolling the latter, comprising a textile backing (1) in tape form and an adhesive coating (5), comprising a pressure-sensitive contact adhesive, applied to one side of the textile backing (1), **characterized in that** the textile backing (1) in tape form comprises a sewn nonwoven, which is formed from a nonwoven material having a multiplicity of sewn-in seams (2) running parallel to one another, so that a surface of valleys (3) and elevations (4) from seam to seam is obtained.

2. Adhesive tape according to Claim 1, **characterized in that** the nonwoven material is formed from cellulose fibres,

3. Adhesive tape according to Claim 1 or 2, **characterized in that** the sewn seams (2) comprise breakable sewing threads.

4. Adhesive tape according to one of Claims 1 to 3, **characterized in that** the nonwoven material comprises polyester fibres.

5. Adhesive tape according to one of Claims 1 to 4, **characterized in that** the sewing threads of the sewn seams (2) comprise unbreakable threads, in particular of aramid.

6. Adhesive tape according to one of Claims 1 to 5, **characterized in that** the nonwoven material is compacted.

## Revendications

1. Bande adhésive pour enrouler un rouleau de bande adhésive et pour le dérouler comprenant un support (1) textile sous forme de bande et un revêtement adhésif (5) appliqué sur le support (1) d'un revêtement adhésif de contact sensible à la pression,
**caractérisée en ce que** le support (1) sous forme de bande est à base d'un non-tissé cousu qui est constitué d'un matériau d'un matériau non-tissé avec un grand nombre de coutures (2) parallèles entre elles et ourlées à points rabattus, afin de former une surface faite de creux (3) et de bosses (4) de couture à couture.

2. Bande adhésive selon la revendication 1,
**caractérisé en ce que** le matériau non-tissé est constitué de fibres de cellulose.

3. Bande adhésive selon la revendication 1 ou 2,
**caractérisé en ce que** les coutures à coudre (2) se composent de fils à coudre déchirables.

4. Bande adhésive selon l'une quelconque des revendications 1 à 3,
**caractérisé en ce que** le matériau non-tissé est à base de fibres de polyester.

5. Bande adhésive selon l'une quelconque des revendications 1 à 4,
**caractérisé en ce que** les fils à coudre des coutures à coudre sont à base de fils non déchirables, notamment à base d'aramide.

6. Bande adhésive selon l'une quelconque les revendications 1 à 5,
**caractérisé en ce que** le matériau non-tissé est comprimé.
